**Europäisches Patentamt**

**European Patent Office**

**Office européen des brevets**

(19)

(11) Veröffentlichungsnummer : **0 358 026 B1**

# EUROPÄISCHE PATENTSCHRIFT

(12)

(45) Veröffentlichungstag der Patentschrift :
**15.04.92 Patentblatt 92/16**

(51) Int. Cl.$^5$ : **A01D 78/10**

(21) Anmeldenummer : **89115368.6**

(22) Anmeldetag : **19.08.89**

(54) **Zinkenkreisel für Kreiselheumaschinen.**

(30) Priorität : **08.09.88 DE 3830543**

(43) Veröffentlichungstag der Anmeldung :
**14.03.90 Patentblatt 90/11**

(45) Bekanntmachung des Hinweises auf die
Patenterteilung :
**15.04.92 Patentblatt 92/16**

(84) Benannte Vertragsstaaten :
**AT BE CH DE FR IT LI NL SE**

(56) Entgegenhaltungen :
**DE-A- 1 457 969**
**US-A- 3 664 106**

(73) Patentinhaber : **CLAAS SAULGAU GMBH**
**Postfach 1154**
**W-7968 Saulgau (DE)**

(72) Erfinder : **Jakobi, Wilhelm**
**Mühlstrasse 32**
**W-7968 Saulgau-Bogenweiler (DE)**

EP 0 358 026 B1

## Beschreibung

Die Erfindung bezieht sich auf einen Zinkenkreisel für Kreiselheumaschinen nach dem Oberbegriff des Hauptanspruches.

Ein derartiger Zinkenkreisel ist bereits aus der US-A-3664106 bekannt.

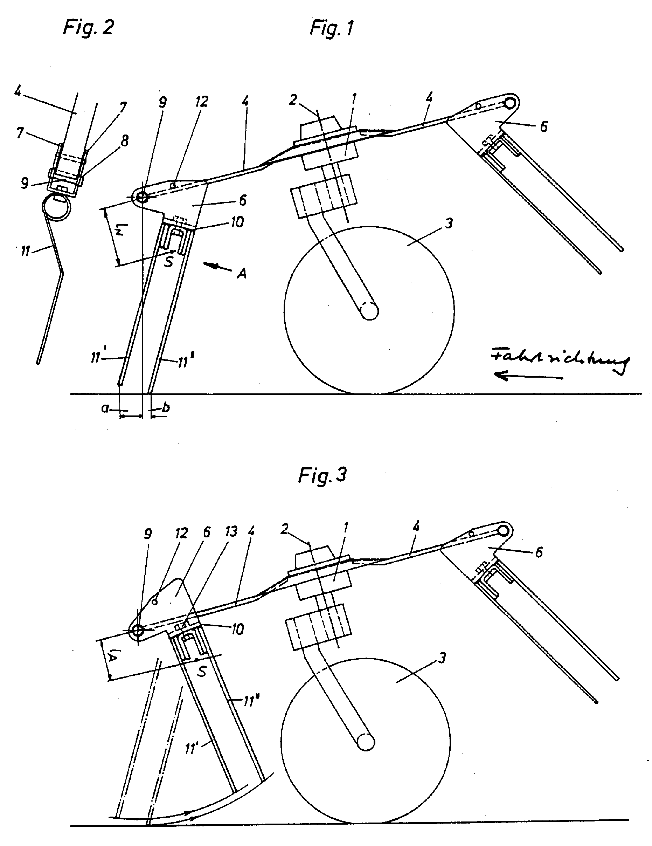

Darüber hinaus ist ein Zinkenkreisel dieser Art ist in der DOS 14 57 969 (Figuren 2, 4, 5) dargestellt. Die Zinken sind hier an Zinkenträgern befestigt, die ihrerseits verschwenkbar mit den Zinkenarmen verbunden sind. Die Anordnung wurde so gewählt, um den Zinken eine Ausweichmöglichkeit beim Überfahren von Bodenunebenheiten zu ermöglichen. Damit die Zinken bei Unebenheiten schnell vom Boden freikommen, wurden die Schwenkachsen für die Zinkenträger weit nach außen gezogen und die langen Schenkel der Zinken etwa parallel zur Drehachse des Zinkenkreisels geführt. Diese Anordnung hat mehrere Nachteile. Die wichtigsten liegen darin, daß die Enden der Zinkenträger in der bodennächsten Stellung sehr tief liegen, und dadurch bei hohen Schichtdicken des Erntegutes in dieses eindringen können, wobei sich Gutteile an den Enden der Zinkenträger aufhängen und in Umlauf geraten, und zum anderen wird das Erntegut von den stark geneigten Schenkeln der Zinken zum Boden gedrückt und zum Teil von den Grasstoppeln festgehalten.

Diese beiden funktionswichtigen Nachteile werden durch eine Ausgestaltung nach der Erfindung vermieden und noch zusätzliche Vorteile werden erreicht. Durch geeignete Wahl der Schwenkachsen und die Ausgestaltung der Zinkenträger und Zinken kann erreicht werden, daß die Zinken in der normalen Arbeitsstellung vom Erdboden gesehen in bezug auf die Fahrtrichtung nach hinten geneigt sind. Dadurch wird das Erntegut etwas vom Boden angehoben und kann ohne Hängenbleiben und Beschädigung zur Seite abgeführt werden. Wenn Zinkenträger und Zinken durch Bodenunebenheiten oder Fremdkörper aber nach innen ausweichen, sollen die Zinken nach vorne geneigt sein, damit sie nicht in den Boden einspiessen und Fremdkörper leichter überstreifen können.

Weitere erfindungsgemäße Vorteile ergeben sich aus den Unteransprüchen.

Anhand von drei Abbildungen wird die Erfindung beispielhaft erläutert:

Fig. 1 zeigt einen Zinkenkreisel von der Seite in normaler Arbeitsstellung,

Fig. 2 zeigt eine Ansicht in Richtung des Pfeiles A (Fig. 1)

Fig. 3 zeigt einen Zinkenkreisel entsprechend Fig. 1, wobei sich ein Zinkenträger mit Zinken in einer Ausweichstellung befindet.

Ein Zinkenkreisel (1) läuft um eine Drehachse (2), die zum Erdboden geneigt ist, um. Er wird durch ein Laufrad (3) abgestützt. Der Zinkenkreisel (1) hat mehrere radialgestellte Zinkenarme (4), die an ihren freien Enden tangential gestellte Bolzen (5) tragen. Ein nach oben offener Zinkenträger (6) umfaßt von unten her einen Zinkenarm (4). Die beiden Schenkel (7) des Zinkenträgers (6) haben Bohrungen (8), in denen der Bolzen (9) beidendig gelagert ist. Durch diese Gestaltung der Lagerung der Zinkenträger (6) an den Zinkenarmen (4) wird eine kostengünstige Ausführung erreicht.

Der Zinkenträger (6) besitzt einen Quersteg (10), an dem ein Zinkenpaar (11) mit Zinken (11', 11") angeschraubt ist. Zinkenträger (6) und Zinkenpaar (11) haben einen gemeinsamen Schwerpunkt bei S. In Bezug auf eine Umlaufebene hat der Schwerpunkt S einen senkrechten Abstand 1 N (Fig. 1) bzw. 1 A (Fig. 3) von dem Bolzen (9).

Wenn der Zinkenkreisel (1) angetrieben wird, entsteht eine durch den Schwerpunkt S gehende Fliehkraft, die Zinkenträger (6) und Zinkenpaar (11) nach außen in eine Normalstellung verschwenkt (Fig. 1). Diese Stellung wird durch einen Stift (12) oder dergleichen begrenzt, der die beiden Schenkel (7) durchsetzt. Wenn einer der Zinken (11', 11") auf ein Hindernis trifft, können sie entgegen der Fliehkraft nach innen verschwenken und nehmen dann die in Fig. 3 ausgezogen dargestellte Lage ein. Diese Lage wird dadurch begrenzt, daß ein Schraubenkopf (13) gegen die Unterseite des Zinkenarmes (4) schlägt.

Wenn der Stift (12) gezogen wird, können ein oder mehrere Zinkenpaare (11) so weit umgeschlagen werden, daß sie über den Zinkenarmen (4) liegen und damit eine unfallsichere Transportstellung ermöglichen.

In der Normalstellung (Fig. 1) hat der äußere Zinken (11') einen Abstand a in Fahrtrichtung vor dem Lot durch die Bolzen (9) und der innere Zinken (11") einen Abstand b hinter dem gleichen Lot.

## Patentansprüche

1. Zinkenkreisel (1) für Kreiselheumaschinen, die um eine zum Erdboden geneigte Drehachse (2) umlaufen, und bei denen die Zinkenträger (6) für die äußeren und inneren Zinken (11', 11") an etwa tangential zum Umkreis der Zinkenarme (4) liegenden Achsen (9) pendelbar gelagert sind, wobei die Zinken (11', 11") in einer durch die Fliehkraft bewirkten normalen Arbeitsstellung am Erdboden in bezug auf die Fahrtrichtung vom Erdboden nach hinten geneigt sind, dadurch gekennzeichnet, daß die Zinken (11', 11") in der Arbeitssetellung bei

2

Aulaufen an Bodenunebenheiten oder Fremdkörper um die Zinken-Pendelache (9) entgegen der Fahrtrichtung verschwenkbar sind, wobei sie in der verschwenkten Ausweichstellung in Fahrtrichtung vom Erdboden nach vorne geneigt sind.

2. Zinkenkreisel nach Anspruch 1, dadurch gekennzeichnet, daß in der Normalstellung mindestens die Spitze eines Zinkens (11′, 11″) vor der Lotrechten liegt.

3. Zinkenkreisel nach den Ansprüchen 1 und 2, dadurch gekennzeichnet, daß die Lotrechte durch die Zinken-Pendelachse (9) hindurch gehend, zwischen der Spitze eines äußeren Zinkens (11′) und der Spitze eines inneren Zinkens (11″) auf den Erdboden trifft, wobei die Zinken-Pendelachse (9) durch einen Schwenkbolzen gebildet wird.

4. Zinkenkreisel nach den Ansprüchen 1 - 3, dadurch gekennzeichnet, daß die Pendelfähigkeit der Zinkenträger (6) um Schwenkbolzen (9) in beiden Richtungen durch Anschläge (12, 13) begrenzt ist, von denen ein Anschlag (12) entfernt werden kann, so daß die Zinkenträger (6) mitsamt den Zinken (11, 11′, 11″) zur Erzielung einer unfallsicheren Transportstellung so weit verschwenkt werden können, daß die Spitzen der Zinken (11′, 11″) nach innen zur Drehachse (2) der Zinkenkreisel (1) hin gerichtet sind.

5. Zinkenkreisel nach den Ansprüchen 2 - 4, dadurch gekennzeichnet, daß die Schwenkbolzen (9) am freien Ende der Zinkenarme (4) befestigt bzw. angeschweißt sind.

## Claims

1. Rotary tine assemblies (1) for rotary hay making machines, which rotate about an axis of rotation (2) which is inclined with respect to the ground, and in which the tine carriers (6) for the outer and inner tines (11′, 11″) are mounted swingably on axes (9) disposed approximately tangentially to the circumference of the tine arms (4), wherein the tines (11′, 11″) are inclined rearwardly from the ground in relation to the direction of travel in a normal operating position on the ground, which is produced by centrifugal force, characterised in that in the operating position when encountering irregularities in the ground or foreign bodies the tines (11′, 11″) are pivotable about the tine swing axis (9) in opposite relationship to the direction of travel, wherein the tines are inclined forwardly from the ground in the direction of travel in the pivoted deflected position.

2. Rotary tine assemblies according to claim 1 characterised in that in the normal position at least the tip of a tine (11′, 11″) is disposed in front of the vertical.

3. Rotary tine assemblies according to claims 1 and 2 characterised in that the vertical line through the tine swing axis (9) meets the ground between the tip of an outer tine (11′) and the tip of an inner tine (11″), the tine swing axis (9) being formed by a pivot pin.

4. Rotary tine assemblies according to claims 1 to 3 characterised in that the swingability of the tine carriers (6) about pivot pins (9) is restricted in both directions by stops (12, 13) of which one stop (12) can be removed so that the tine carriers (6) together with the tines (11, 11′, 11″), to produce an accident-proof transportation position, can be pivoted to such an extent that the tips of the tines (11′, 11″) are directed inwardly towards the axis of rotation ( 2 ) of the rotary tine assemblies (1).

5. Rotary tine assemblies according to claim 2 to 4 characterised in that the pivot pin (9) is fixed or welded at the free end of the tine arms (4).

## Revendications

1. Rotor à dents (1) pour faneuses rotatives, qui tourne autour d'un axe de rotation incliné vers le sol et dans lequel les supports (6) destinés aux dents externes et internes (11′, 11′) sont montés de façon pendulaire sur des axes (9) prévus sensiblement tangentiellement à la circonférence des bras à dents (4), les dents (11′, 11″) étant inclinées par la force centrifuge vers l'arrière à partir du sol dans le sens de la marche dans une position de travail normale sur le sol, caractérisé en ce que les dents (11′, 11″), quand elles sont en position de travail, peuvent pivoter autour de l'axe de pivotement (9) dans le sens contraire à celui de la marche quand elles passent sur des inégalités du sol ou des corps étrangers, cas dans lequel elles sont inclinées vers l'avant à partir du sol, dans le sens de la marche, dans leur position pivotée rétractée.

2. Rotor à dents selon la revendication 1, caractérisé en ce que la pointe d'une dent (11′, 11″) au moins est située à l'avant de la verticale dans la position normale.

3. Rotor à dents selon les revendications 1 et 2, caractérisé en ce que la verticale qui passe par l'axe de pivotement (9) des dents rencontre le sol entre la pointe d'une dent externe (11′) et la pointe d'une dent interne (11″), l'axe de pivotement des dents (9) étant constitué par une tige de pivotement.

4. Rotor à dents selon l'une des revendications 1 à 3, caractérisé en ce que la capacité de pivotement des dents (6) autour de l'axe de pivotement (9) dans les deux sens est limitée par des butées (12, 13), dont l'une (12) peut être retirée de manière que les supports de dents (6) avec les dents (11, 11', 11") puissent être suffisamment pivotés pour parvenir dans une position de transport leur évitant de tomber, les pointes des dents (11', 11") étant dirigées vers l'intérieur en direction de l'axe de rotation (2) du rotor à dents (1).

5. Rotor à dents selon les revendications 2 à 4, caractérisé en ce que les axes de pivotement (9) sont fixés ou soudés à l'extrémité libre des bras à dents (4).

*Fig. 2*

*Fig. 1*

*Fig. 3*

Fahrrichtung